(19)

Europäisches Patentamt

European Patent Office

Office européen des brevets

(11) **EP 4 336 295 A1**

(12) **EUROPEAN PATENT APPLICATION**

(43) Date of publication:
**13.03.2024 Bulletin 2024/11**

(21) Application number: **23190763.5**

(22) Date of filing: **10.08.2023**

(51) International Patent Classification (IPC):
**G05B 23/02** *(2006.01)*

(52) Cooperative Patent Classification (CPC):
**G05B 23/0254; G05B 23/0283**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 TW 111209871 U
09.11.2022 TW 111142857**

(71) Applicant: **Hosea Precision Co., Ltd.
Taichung City (TW)**

(72) Inventors:
- **Wei, Yu-Cheng
  Taichung City (TW)**
- **Chen, Sheng-Jhe
  Taichung City (TW)**

(74) Representative: **Lang, Christian
LangPatent Anwaltskanzlei IP Law Firm
Ingolstädter Straße 5
80807 München (DE)**

(54) **SYSTEM AND METHOD FOR INTELLIGENTLY MONITORING MACHINE EQUIPMENT**

(57) The present invention discloses system and method for intelligently monitoring machine equipment, which comprises machine working status sensing module and AI based machine diagnosis module. The AI based machine diagnosis module includes a machine-side preliminary data processing module and a remote advanced data processing module. The machine working status sensing module obtains working status signals of machine equipment for a feature calculation module process and calculate to obtain features of the signals. A big data analysis module of the remote advanced data processing module performs artificial intelligence calculation on the features to establish AI fault type model and AI decline degree model. A fault prediction/health management module of the remote advanced data processing module processes the features of subsequent signals and compares with the AI fault type models and AI decline degree models to obtain prediction information of fault type and decline degree case for user monitoring.

FIG.1

Processed by Luminess, 75001 PARIS (FR)

**EP 4 336 295 A1**

**Description**

**FIELD OF THE INVENTION**

The present invention relates to system and method for intelligently monitoring machine equipment, especially to a predictive diagnosis technology that can obtain working status signals to predict information of fault type or decline degree case of machine equipment for user monitoring in real time.

**BACKGROUND OF THE INVENTION**

Along with the development of miniaturization of workpieces and requirements of high precision, the requirements of precision and speed of machine equipment's processing become strict. Although the precision machinery and machine tool industry develop rapidly, the shipment volumes of machinery equipment have increased year by year, however, improvements to the processing quality and stability are still unable to further break through the technical bottleneck. Investigating the reason, the technical bottleneck is that the conventional machine tool does not have a set of technologies that can efficiently integrate real-time sensing with artificial intelligence computing, so that users cannot correctly monitor the variation status of machine in real time, results in machine being about to fail but having not been detected, further results in the declines in production quality and yield, and when the machine equipment is shut down, it will cause impacts on production schedules and decline in production capacity during maintenance, finally results in serious losses.

Furthermore, as well known, a processing machine is used to process workpieces, such as cut or drill the workpieces, an indexing plate is equipped on the processing machine to hold and turn the workpiece for processing. Furthermore, with the development of science and technology, the requirement for the accuracy of the workpiece is getting higher and higher, and the requirement of stability and precise for the division and rotation angle of the indexing device is also higher. At present, there are more common requirements for auxiliary processing of rotary indexing of general angle gauges and differential angle gauges. The indexing system of general angle gauges has 1 degree and 5 degrees of rotary indexing, while the indexing of differential angle gauges has 0.001 degrees of rotation scale. Moreover, with the development of workpieces in the direction of miniaturization and high precision requirements, the requirements for the operation and processing accuracy of the indexing device of machine are becoming increasingly strict. Although with the rapid development of the precision machinery and machine tool industry, the shipment volumes of mechanical equipment have been increasing year by year. Many manufacturers hope to seize the opportunity, and relatively invest a lot of research and development costs. However, in improving the processing quality and stability, it is still unable to break through the bottleneck of technology. Investigating the reason, the technical bottleneck is that the indexing device of conventional machine does not have a good AI monitoring system that can monitor the operation and processing status of the indexing device of machine in real time, so it cannot provide users with real-time processing status and management information of the indexing device, so that failures of machine that are about to fail but are not found will indeed occur frequently and result in a decline in production quality and yield. If the machine equipment is shut down and fails, the production schedule will be impacted during the maintenance period, and production capacity will be reduced as to result in major financial losses. loss, thus causing inconvenience and distress during processing.

In view of the fact that the indexing device of the conventional processing machine configuration does not have the construction of technology integration such as monitoring working status data and artificial intelligence calculation, so that it is impossible to effectively monitor the processing status information and predictive diagnostic information of the operating machine (such as the fault types and the decline degree).

**SUMMARY OF THE INVENTION**

The main purpose of the present invention is to provide a system and method for intelligently monitoring machine equipment, which mainly integrates real-time monitoring data and artificial intelligence calculation technologies to monitor the processing status information of the operating machine equipment, predict diagnostic information such as fault types and decline degree cases, and feedback the prediction information to the user to arrange his maintenance schedule. The technical means to achieve the above-mentioned main purpose include a machine working status sensing module and an AI based machine diagnosis module. The AI based machine diagnosis module includes a machine-side preliminary data processing module and a remote advanced data processing module. The machine working status sensing module senses the working status signals of operating machine equipment. The machine-side preliminary data processing module includes a feature calculation module for obtaining features of the working status signals. A big data analysis module of the remote advanced data processing module performs artificial intelligence calculation on the features to establish an AI fault type model and an AI decline degree model. A fault prediction/health management module of the remote advanced data processing module processes the features of the subsequent sensing signals and compares with the AI fault type models and AI decline degree models to predict the prediction information of fault type and decline degree case, and then transmit the prediction information to the preliminary data processing module through an information transmission module and display it on a display for user monitoring.

## BRIEF DESCRIPTION OF THE DRAWINGS

Fig. 1 is a schematic block diagram of the basic architecture of the present invention;

FIG. 2 is a schematic diagram of another architecture of the present invention;

Fig. 3 is a schematic block diagram of the complete operation process of the present invention;

FIG. 4 is a schematic diagram of the implementation of the present invention to calculate bearing fault categories by self-organizing feature mapping algorithm;

Fig. 5 is a schematic diagram of the implementation of classification of the present invention by using KNN supervised algorithm;

Fig. 6 is a schematic diagram of the curves of the average vibration RMS of 11 delivery machines in comparison periods in accordance with the present invention;

Fig. 7 is a schematic diagram of calculating 3 times standard deviation of B-axis for the delivery machines by using the GMM algorithm in accordance with the present invention;

Fig. 8 is a schematic diagram of calculating the 3 times standard deviation of C-axis for the delivery machines by using the GMM algorithm in accordance with the present invention;

Fig. 9 is a schematic diagram of calculating 3 times standard deviation of B-axis of the delivery machines by using the NN algorithm in accordance with the present invention; and

Fig. 10 is a schematic diagram of calculating 3 times standard deviation of C-axis of the delivery machines by using the NN algorithm in accordance with the present invention.

## DETAILED DESCRIPTION OF THE PREFERRED EMBODIMENT

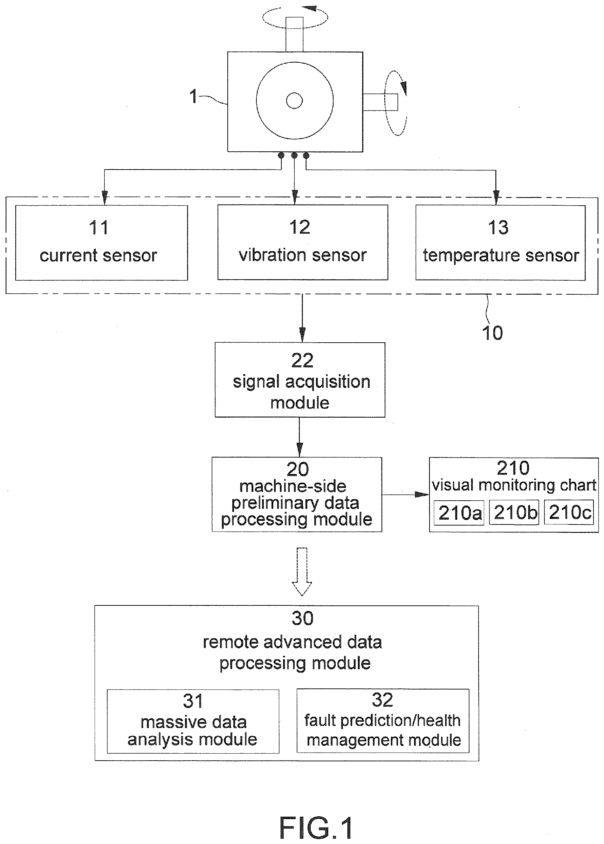

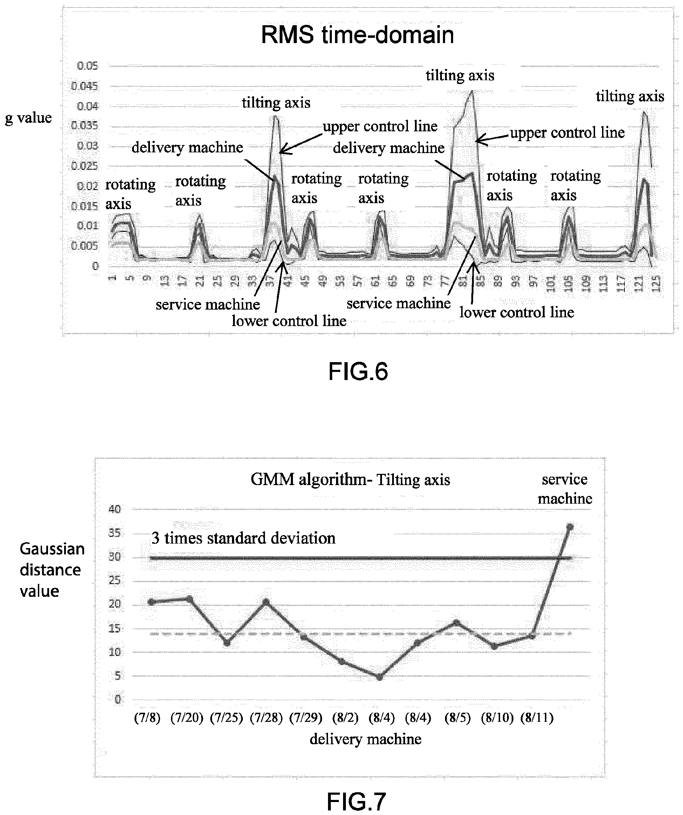

Referring to Figs. 1 to 3, one embodiment of the present invention, which includes a machine working status sensing module 10 and an AI based machine diagnosis module. The AI based machine diagnosis module includes a machine-side preliminary data processing module 20 and a remote advanced data processing module 30. The machine working status sensing module 10 is configured to continuously sense the axial status (such as the tilting axis (B axis) and the rotating axis (C axis)) of a machine equipment 1 (such as indexing plate) during an initial working period and subsequent working periods to produce corresponding initial and subsequent working status signals. The initial and subsequent working status signals include current signals (such as the current of the motor of the machine), the vibration signals (such as the vibration of the working table of the machine) and the temperature signals (such as the temperature of the shafts of the machine). The machine-side preliminary data processing module 20 includes a feature calculation module. The machine-side preliminary data processing module 20 is used to extract features of the initial and subsequent working status signals and perform feature processing and mathematical calculations on the initial and subsequent working status signals to generate corresponding initial and subsequent feature information. The machine-side preliminary data processing module 20 then transmits the initial and subsequent feature information through an information transmission module 40 (such as WIFI, 4G, 5G wireless communication module and communication network) to the remote advanced data processing module 30. The remote advanced data processing module 30 includes a big data analysis module 31 and a fault prediction/health management module 32. The fault prediction/health management module 32 includes a fault/decline case database 320. The big data analysis module 31 performs artificial intelligence calculation on the initial and subsequent feature information to establish corresponding AI fault type models and AI decline degree models, and the AI fault type models and AI decline degree models are stored in the fault/decline case database 320. The fault prediction/health management module 32 continuously receives and calculates the subsequent feature information which transmitted from the feature calculation module, and performs feature processing and mathematical calculations on the subsequent working status signals to generate corresponding subsequent feature information of the subsequent working status signals. The fault prediction/health management module 32 then uses the subsequent feature information to perform artificial intelligence calculations and model comparisons with the AI fault type models and the AI decline degree models, so as to obtain corresponding prediction information of fault type and decline degree of the machine equipment. The fault prediction/health management module 32 passes the prediction information of fault type and decline degree to the machine-side preliminary data processing module 20 through the information transmission module 40, so that the prediction information can be displayed on a display screen of the machine-side preliminary data processing module 20 for monitoring by the user at a side of the machine. In the embodiment of the present invention, the algorithms of the artificial intelligence calculations of the big data analysis module 31 and the fault prediction/health management module 32 are selected from root mean square algorithm (RMS), Gaussian mixture model algorithm (GMM) and neural network algorithm (NN). Wherein, the root mean square algorithm (RMS) calculates the time-domain signal features of the initial and subsequent working status signals, the Gaussian mixture model algorithm (GMM) calculates the time-domain and frequency-domain signal features of the initial and subsequent working status signals, and the neural network algorithm (NN) calculates the frequency-domain signal features of the initial and subsequent working status signals. Wherein, the prediction information of fault type and decline degree is the numerical information calculated and obtained by the root mean square algorithm (RMS), the Gaussian mixture model algorithm (GMM) and the neural network algorithm (NN). The fault prediction/health management module 32 makes the numerical information into RMS, GMM, and NN control charts, and the control charts includes numerical values and control lines. The feature calculation module 20 connects to the fault prediction/health management module through the information transmission module to download and browse the control chart in real time (referring to Figs. 7 to 11).

Referring to Figs. 1 to 3, in addition to the overall technical content of the above-mentioned embodiment, the application of the present invention also includes a terminal device 50 communicating with the fault prediction/health management module 32 through the information transmission module 40. The machine working status sensing module 10 includes current sensor 11, vibration sensor 12 and temperature sensor 13. The feature calculation module converts and processes the sensed current signals, vibration signals and temperature signals of the machine into corresponding current, vibration and temperature feature information, and transmits the current, vibration and temperature feature information to the remote advanced data processing module, so as to obtain prediction information and control charts of the fault type and decline degree. The machine-side preliminary data processing module 20 receives and display the control charts on a display screen 21 as a visual monitoring chart 210, wherein the visual monitoring chart 210 is selected from the group consist of current information monitoring chart 210a, vibration information monitoring chart 21 0b, and temperature information monitoring chart 210c.

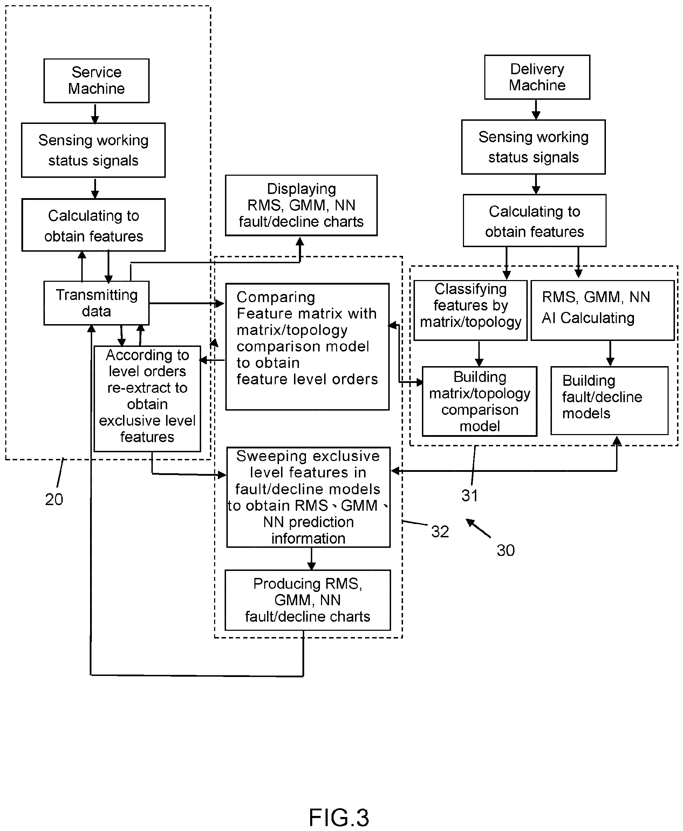

Referring to Figs. 1 and 3, in the preferable embodiment of the present invention, the feature calculation module performs feature processing and mathematical calculations on the initial and subsequent working status signals, include steps of: (a) signal extraction step which is to use the signal acquisition module 22 to continuously capture the huge amount of initial and subsequent working status signals from the machine working status sensing module 10; (b) signal analysis step which is to check in order whether the initial and subsequent working sensing signals are interfered and whether the working sensing signal is operating in a reasonable normal range according to the physical phenomenon; (c) feature extraction step which is to convert the initial and subsequent working status signals into feature information of time-domain, frequency-domain, envelope curve and power spectral density; (d) feature selection step which is to perform selection algorithms to select important target feature information, and; (e) data normalization step which performs data normalization on the target feature information.

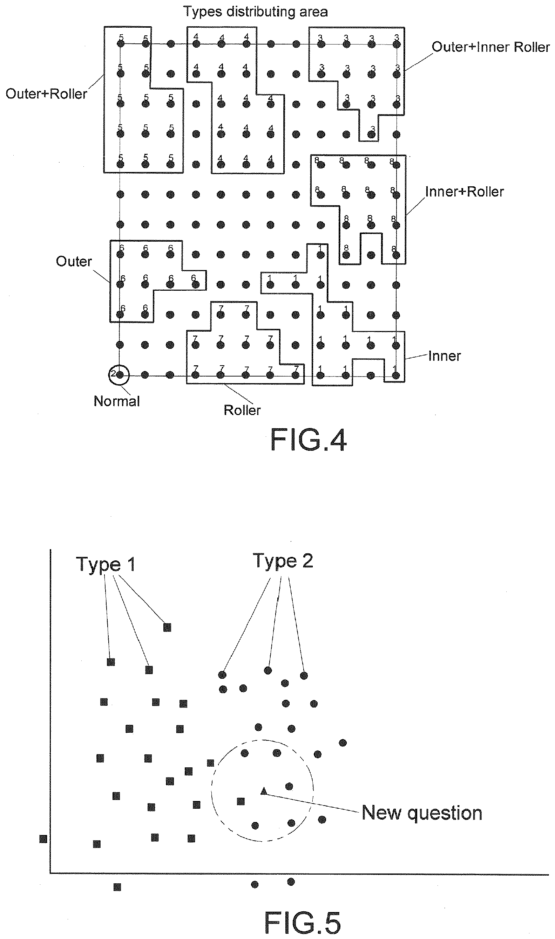

Preferably, please refer to Figs. 4 and 5, the big data analysis module includes a feature matrix/topology comparison model building module. The feature matrix/topology comparison model building module is used to classify the initial feature information to establish feature matrix/topology comparison models, and store the feature matrix/topology comparison models in a feature matrix/topology comparison model database of the fault prediction/health management module. The fault prediction and The health management module uses the feature matrix/topology comparison models to perform a feature matrix/topology hierarchical comparison on the initial feature information to obtain corresponding feature level orders, and then according to the feature level orders to re-extract the subsequent feature information during the subsequent working period to obtain exclusive level features of the subsequent feature information, and then sweep and compare the exclusive level features of the subsequent feature information with the AI fault type models and the AI decline degree models to obtain the corresponding prediction information of fault type and decline degree of the machine equipment. The algorithm of the feature matrix/topological comparison model building module is selected from the group consist of K-nearest-neighbor algorithm (K-Nearest-Neighbor, KNN) and self-organizing feature map algorithm (self-organizing feature maps, SOM).

The specific embodiment of knowledge mining and case-based reasoning of the present invention, the fault prediction/health management module 32 performs method including knowledge mining step and case executed formula reasoning step. When the feature calculation module transmits feature information to the fault prediction/health management module 32 through the information transmission module 40, the fault prediction/health management module 32 executes the knowledge mining step and performs a knowledge mining operation based on the feature information to obtain corresponding feature information, and then the corresponding feature information is input into the case executed formula reasoning step, and finally the prediction information of the machine equipment is obtained through the operation of an acquisition step. Specifically, the operation of the acquisition step is to perform similarity calculation (K-NN nearest neighbor algorithm), and select the case most similar to the feature information from the fault/decline case database 320, so as to obtain the prediction information of the machine equipment.

In the embodiment of the present invention, based on the above-mentioned embodiment, the following steps after the acquisition step include: (a1) reusing step which combines the fault/decline cases extracted from the fault/decline case database 320 with knowledges and experiences of predecessors or experts to form a new case including solution suggestions; (b1) revision step which is to test the proposed new case solution, and to revise it if there is any deviation, and; (c1) save steps which reconstructs new problems, and continuously accumulates cases to provide new cases for use. Please refer to Fig. 3, whenever there are new data, it will be taken out from the database, the models will be modified, and then stored in the database.

The present invention is applied to the fault prediction/health management system (Prognostic and Health Management, PHM) of the intelligent function of the indexing plate, through the vibration sensor 12, the current sensor 11 and the temperature sensor 13, perform feature calculations on the various physical quantities of the signals of the current, vibration and temperature, and then search for the best solution through the fault/decline case database 320. The establishment of the fault/decline case database 320 is to collect and analyze huge amounts of data through the big data analysis module 31, the various AI fault type models are obtained and stored in the fault/decline case database 320. The user end can use the Edge Computer (SMB can be used) and the sensors to capture a variety of physical quantities through the sensors equipped on the machine and perform feature calculations. A large number of data and feature information of a large number of machine equipment will be uploaded to the cloud monitoring platform. Through the remote advanced data processing module 30 on the cloud monitoring platform can perform AI pre-diagnosis analysis to determine whether the machine equipment (such as indexing plate) is in the normal working range.

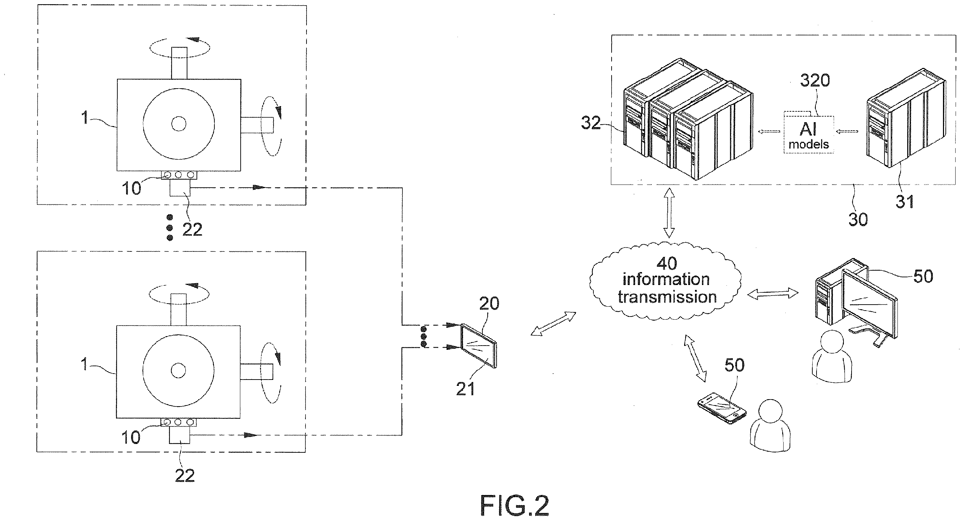

Since the load of the deep learning algorithm is much larger than that of the traditional machine learning, the GPU graphics interface card will be used for calculation to achieve the ability to build models in a short time. Therefore, training the models and predicting the health of the machine equipment through the models should not be calculated on the machine-side computer (the computer equipped at side of machine). The best way is that the machine-side computer obtains sensing signals of the machine equipment (such as vibration, temperature and current signals, etc.), and then the machine-side computer preliminarily processes and calculates the sensing signals to obtain preliminary data (such as feature information of the sensing signals) and passes those data out for calculations by a remote AI platform. The machine-side preliminary data processing module 20 of the machine-side computer sends the calculation data to the remote advanced data processing module 30 built in the remote AI platform, and then the remote AI platform performs AI calculations (shallow learning or deep learning calculations) through the remote advanced data processing module 30. The results calculations are then sent back to the machine-side preliminary data processing module 20 of the machine-side computer. The machine-side computer used in the present invention is a Raspberry Pi single-board computer. Whether it is a sensor signal or an algorithm calculation result, the amount of information should not be too large through the operation of the Raspberry Pi single-board computer. The main reason is that the terminal equipment receives the collected data, feature calculation and AI prediction analysis still need to be processed, so the CPU load should not be too large, otherwise there will be problems of delay. Therefore, the present invention develops the machine-side preliminary data processing module 20 equipped on the machine-side computer, so as to reduce the load on the Raspberry Pi single-board computer of the machine-side computer. The fault prediction and health management system architectures of the present invention are respectively shown in Figs. 2 and 3.

In an experimental embodiment, the present invention uses the computer with high computing ability as a remote (cloud) AI platform built with a big data analysis module 31, to collect the online sensing signals, processed and calculated data and maintenance data between the machine-side computer and the remote AI platform, and uses big data analysis strategies, such as signals pre-processing, filtering signals, feature extraction for signals, feature selection, data normalization and shallow/deep learning algorithm, to build AI models of fault types and decline cases of the machine equipment, and then store AI models of fault types and decline cases in the fault/decline case database 320 in the remote AI platform. The present invention also uses Raspberry Pi single-board computer as the machine-side computer. The machine-side computer obtains various physical quantities of working status of the machine equipment through various sensors (working status sensing module), such as accelerometers, ammeters, thermometers, etc., and then proceed with a feature extraction method to process and calculate the working status signals through the feature calculation module to obtain relevant feature information of the sensing signals. Next, the machine-side computer pass the feature information of the working status signals to the remote advanced data processing module 30 through the MQTT communication protocol, and the remote advanced data processing module 30 predicts the fault type and decline degree case of the machine equipment through comparing the feature information with fault types and decline degree cases of the fault/decline case database 320 to obtain prediction information of fault type and decline degree case, and then sends the prediction information back to the machine-side computer equipped at the side of the machine, i.e. feeds back the prediction information to the user, so that subsequent user will be able to schedule repairs for the machine equipment.

Furthermore, the system of the present invention can upload data and information of the machine-side computer through the information transmission module 40 (server message block; SMB networking technology) controlled by the machine-side preliminary data processing module 20 to reach to the remote advanced data processing module 30 (such as a cloud server platform), the AI platform will use the fault prediction/health management system (PHM) to detect the classification of equipment abnormalities. The fault prediction/health management system applies big data analysis technology, through the AI prediction model combined with the experience and knowledge of experts, it is possible to avoid equipment's unpredictable faults and further increase production capacity of the machine. Its core is to use the integration of equipment information and signals of sensors, use various effective AI algorithms and AI models to predict, monitor and manage the health status of the machine equipment, emphasize sensing machine equipment status, monitoring equipment health and frequent fault areas and cycles, and through monitoring and analysis the data, predict the occurrence of faults, thereby greatly improving the efficiency of operation and maintenance for the machine equipment.

In addition, the PHM of the present invention adopts AI algorithm and data mining methodology to record the operation status of the machine equipment at any time through monitoring working status of the machine equipment, so as to perform decline prediction. When the machine equipment is abnormal, it will take necessary measures and maintenance to avoid serious failures caused by accumulation of problems. The main work includes working status signals acquisition and analysis. Through the establishment and performance of decline prediction model, the product failure rate, remaining life and operation risk are estimated. The important procession is to monitor certain fixed working status signals. If the signals are abnormal, analyze the abnormal source of the machine equipment so as to perform timely maintenance, partial repair or assembly adjustment for the mechanical equipment. The purpose of such procession is to avoid serious damage of the whole machine equipment due to a damage of individual parts, and result in sudden shutdown or the situation where the equipment cannot be repaired.

Through the neural network algorithm, it can help the faulty machine equipment to find out the abnormal features, and it can be fault-tolerant in the error information, and will not affect the weight calculation of the network. After the entire training completed, the output algorithm models will be possible to predict the abnormality of the machine equipment, with the in-depth research on the evolution mechanism of machine equipment's failure and physically quantified models, the prediction models will be gradually revised to improve its prediction accuracy. After the training completed, the prediction models built, and through the SMB networking technology, the cloud monitoring of AI platform will be able to obtain the degree of machine equipment's decline in real time. If the threshold of fault or decline degree is reached, the user will be notified for arranging maintenance. The system of the present invention can use Google TensorFlow API to build shallow/deep machine learning algorithms such as BPNN, RNN, and LSTM. Through those algorithms calculating on the vibration, current, and temperature signals of the machine equipment, and through feature engineering (feature extraction and feature selection), the system of the present invention builds fault type models and decline degree case models of the machine equipment, and then upload to the cloud AI platform, and store in the fault/decline case database 320 of the AI platform.

Knowledge Discovery and data mining are information technologies that are widely valued at present and used to find useful information hidden in a large amount of data from large databases. Knowledge Discovery in Database (KDD) is the process of discovering knowledge from the databases, try to find hidden, effective or new patterned valuable data, and even dig out new information, rules or features. According to the definition of Usama M. Fayyad, Gregory Piatetsky-Shapiro and Padhraic Smyth, the entire process of database knowledge mining includes five steps of data selection, preprocessing, transformation, mining and interpretation/evaluation.

Through the methodology of the knowledge mining process, the maintenance data and standard procedures of machine factories, equipment factories and relevant component factories, and then integrate the models of the unsupervised machine learning algorithm, we can build maintenance knowledge case models. Next, the models must be input to the case-based reasoning (CBR) system according to its features. The case-based reasoning is an important reasoning method emerging in the field of artificial intelligence in recent years, and an effective way to solve problems. It is a theory and research method branched from the field of artificial intelligence, and its basic assumption is that similar problems have similar solutions. Generally speaking, new problems are described or explained by similar problems encountered before, past experiences are used to solve the new problems at present, and are often used to construct knowledge-based system. The life cycle of the CBR algorithm includes four steps: Retrieve, Reuse, Revise and Retain.

The common method for retrieving case of models in the CBR system is the K-Nearest Neighbor (KNN) Algorithm. The KNN is one kind of supervised algorithm of classification, belongs to a category algorithm, and its main concept is in the vector space model, each case is a coordinate position in a multi-dimensional space. If it is a case of the same category, its feature items should be very similar and should be very similar in the space coordinates. The advantage of the KNN is to reduce the calculation time and the burden of the calculation processor. When the KNN is applied in the present invention, the sensing signals and feature information of vibration, current and temperature of working status of the machine are classified by RMS, GMM and NN calculations, and then according to the neighbors of similar categories sweep the information of RMS, GMM, and NN in the order of distance.

From the maintenance case of factory's equipment, for example, the main parts of the indexing plate comprise clamping parts, indexing positioning and transmission parts, the CBR system establishes cases and sources of problem occurrence according to the recorded maintenance information of the indexing plate. The system of the present invention uses the fault/decline case database 320 of the remote advanced data processing module 30 built in a cloud monitoring AI platform, such as a indexing plate in operation, through the machine-side working status sensing module (vibration, current and temperature sensors) sensing the working status of the indexing plate of the machine, through machine-side preliminary data processing module 20 performs calculations on the sensing signals to obtain feature information, extracts feature information and send back to the cloud AI platform. The CBR system on the cloud AI platform uses the K-nearest neighbor algorithm to determine a prediction information of which fault type and decline degree case (such as bearing, transmission belt tension, backlash, tooth crack and nut loosening) may occur on the parts of the indexing plate, and then send the prediction information to the preliminary data processing module 20 of the machine-side computer and display the prediction information for user monitoring.

One AI analysis experiment example of the present invention is for the pre-diagnosis of the indexing plate (taking the diagnosis of the bearing as an example, this case uses "delivery machine" (new machine) and "service machine" (used machine), and the biggest difference is that the delivery machine uses new bearings while the service machine has been used for many years). The experiment example mainly integrates the analyses of "B-axis signal" and "C-axis signal" of the indexing plate, wherein the experimental conditions are feed: F1500, sample rate: 11025Hz and gear ratio: 1:120, and the rotation speed of the motor of tilting axis is 500 rpm (converted into a rotation speed frequency of 8.3Hz). Three diagnostic strategies are proposed: 1. Root mean square (RMS) applying vibration time-domain signal: substituting the time-domain signals into the RMS formula to calculate the feature values, and then using 3 times the standard deviations of time-domain features of multiple indexing plates as upper and lower control lines; 2. Gaussian mixture model algorithm (GMM) applying multiple time-domain and frequency-domain features: using statistical methods to calculate time-domain signal features (9 in total) and frequency-domain signal features (2 in total), adding key rotating speed's frequency features of the two axes (2 in total), totally amount of 13 signal features, and then using the GMM to calculate and obtain corresponding Gaussian distance values, and then using 3 times the standard deviation of multiple indexing plates as warning line; 3. Neural network algorithm (NN) designating specific frequency features: finding out the specific frequency, such as rotating speed frequency and gears meshing frequency, and then judging through the NN.

The diagnosis strategy of the RMS applying time-domain signal is through sensor (such as accelerometer) to obtain vibration time-domain signals of a batch of healthy indexing plates, through the RMS formula (as following formula (1)) to calculate on the time-domain signals per second to obtain RMS value, and then through the method of 3 times of standard deviation to calibrate upper and lower control limits (lines) as shown in Fig. 6. Substituting the operation signals of the service machine, it can be clearly found the difference between the service machine and the delivery machine in the rotation axis. This is because the service machine has been used for many years, and there has been a gap with respect to the operation signals of the delivery machine, and this is a warning to user for paying special attention to the rotation axis. The formula of 3 times of standard deviation is: mean value + (3 x standard deviation).

$$X_{rms} = \sqrt{\frac{\sum_{i=1}^{N} X_i^2}{N}} = \sqrt{\frac{X_1^2 + X_2^2 + \cdots + X_N^2}{N}} \qquad (1)$$

The diagnostic strategy of the GMM applying multiple time-domain and frequency-domain features is through sensor (such as accelerometers) to capture vibration signals of the indexing plate, then through the formulas of feature extraction to extract features of the vibration signals, so as to obtain 9 statistical time-domain features including MV (mean value), MSE (mean square error), SMR (square mean root), RMS (root mean square), MA (maximum absolute value), SF (Skewness factor), KF (kurtosis factor), CF (crest factor) and MF (margin factor), 2 statistical frequency-domain features including RMSF (root mean square frequency) and RVF (root variance frequency), and 2 specific frequency features including key rotating speed frequency feature of the tilting axis (225Hz) and key rotating speed frequency feature of the rotating axis (750Hz). The statistical time-domain feature formulas are as followings:

MV formula:

$$x_1 = \sum_{i=1}^{N} y(i)/N \quad ;$$

MSE formula:

$$x_2 = \sqrt{\sum_{i=1}^{N} (y(i) - x_1)/N} \quad ;$$

SMR formula:

$$x_3 = \left( \sum_{i=1}^{N} |y(i)|/N \right)^2 \quad ;$$

RMS formula:

$$x_4 = \sqrt{\sum_{i=1}^{N} (y(i))^2/N} \quad ;$$

MA formula:

$$x_5 = \max|y(i)| \quad ;$$

SF formula:

$$x_6 = \frac{\sum_{i=1}^{N} (y(i) - x_1)^3}{(N-1)x_2^3} \quad ;$$

KF formula:

$$x_7 = \frac{\sum_{i=1}^{N} (y(i) - x_1)^4}{(N-1)x_2^4} \quad ;$$

CF formula:

$$x_8 = x_5/x_4 \quad ;$$

and

MF formula:

$$x_9 = x_5/x_3$$

The statistical frequency characteristic formulas are as followings:

$$FC = \frac{1}{N}\sum_{f=1}^{N} S(f)$$ ;

$$RMSF = \sqrt{\frac{1}{N}\sum_{f=1}^{N} S(f)^2}$$ ,

and

$$RVF = \sqrt{\frac{1}{N}\sum_{f=1}^{N} (S(f) - FC)^2}$$

where, S(f) is the magnitude response of the fast Fourier transform of x(n), and N is the number of frequency bins.

Through observation, it can be found that there are specific key rotating speed frequencies for both of the tilting axis and the rotating axis, the key rotating speed frequency for the tilting axis is 225Hz and the key rotating speed frequency for the rotating axis is 750Hz. Therefore, integrating these 13 signal features including 9 statistical time-domain features, 2 statistical frequency-domain features and 2 key rotating speed frequency features.

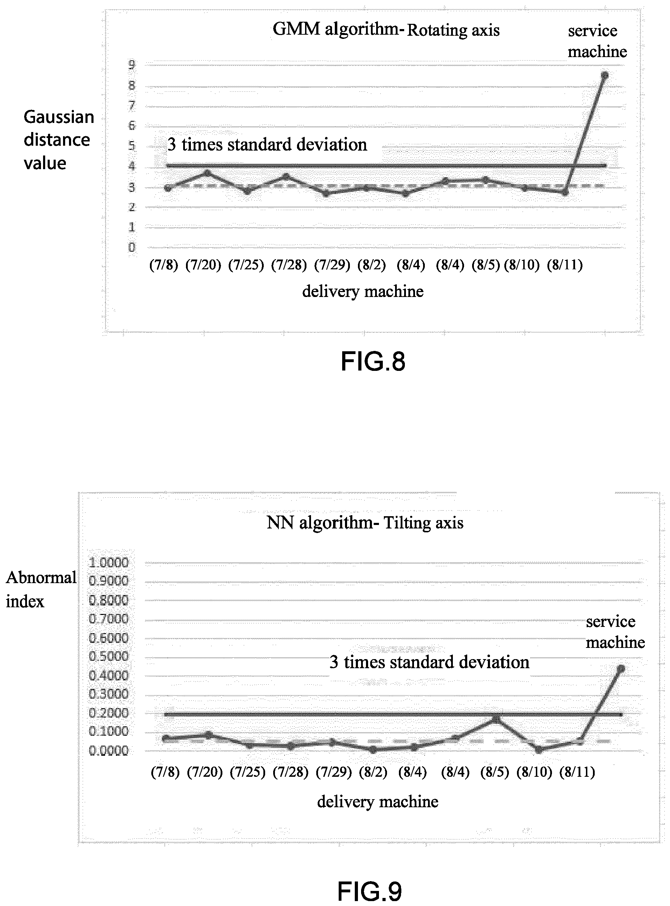

After the 13 signal features obtained through the feature extraction method, the next step is to use the feature selection method. This methodology of the feature selection method is to use principal component analysis (PCA). The 13 signal features of multiple indexing plates are obtained through method of feature extraction, and the 13 signal features are established as a vector matrix, then use the PCA method applying the vector matrix to generate a projection matrix and set contribution ratio, and finally merge them into 4 features. Next, through the GMM algorithm, the GMM of the tilting axis or the rotating axis of each indexing plate is established, a batch of healthy/good indexing plates are selected as healthy models, and the comparison with other indexing plates are shown as Figs. 7 and 8.

From the test of the tilting axis and the rotating axis of the indexing plate, it can be seen that the quality of the delivery machine is good and the accuracy meets the requirements. Therefore, through the methodology of the present invention, it can be seen that the detecting signals of the tilting axis and the rotating axis are also within 3 times the standard deviation. The other is the service machine which has been used for many years, it is not difficult to find the difference between the service machine and the delivery machine.

Furthermore, in one preferrable embodiment of the present invention, except abovementioned 13 calculation formulas for obtaining 13 signal features, we also use power spectral density (PSD) to express the energy distribution of the data on the frequency-domain, i.e. also apply following 8 calculation formulas for obtaining 8 signal features, therefore in the preferrable embodiment of the present invention there are totally 21 signal features. The PSD includes amplitude statistical features and shape statistical features. Therefore,

The amplitude statistical features include the quantities by the following calculation formulas:

Mean:

$$\mu_{amp} = \frac{1}{N}\sum_{i=1}^{N} C(i)$$

Standard deviation:

$$\sigma_{amp} = \sqrt{\frac{1}{N} \sum_{i=1}^{N} [C(i) - \mu_{amp}]^2}$$

Skewness:

$$\gamma_{amp} = \frac{1}{N} \sum_{i=1}^{N} [\frac{C(i) - \mu_{amp}}{\sigma_{amp}}]^3$$

Kurtosis:

$$\gamma_{amp} = \frac{1}{N} \sum_{i=1}^{N} [\frac{C(i) - \mu_{amp}}{\sigma_{amp}}]^4 - 3$$

wherein, let C(i) be the frequency amplitude value of the i-th window, and N represent the number of windows.

The shape statistical features include the quantities by the following calculation formulas:

Mean:

$$\mu_{shape} = \frac{1}{S} \sum_{i=1}^{N} iC(i)$$

Standard deviation:

$$\sigma_{shape} = \sqrt{\frac{1}{S} \sum_{i=1}^{N} (i - \mu_{shape})^2 C(i)}$$

Skewness:

$$\gamma_{shape} = \frac{1}{S} \sum_{i=1}^{N} \left(\frac{i - \mu_{shape}}{\sigma_{shape}}\right)^3 C(i)$$

Kurtosis:

$$\gamma_{shape} = \frac{1}{S} \sum_{i=1}^{N} [\frac{i - \mu_{shape}}{\sigma_{shape}}]^4 C(i) - 3$$

wherein, let C(i) be the frequency amplitude value of the i-th window, N represent the number of windows, and

$$S = \sum_{i=1}^{N} C(i)$$ .

The diagnostic strategy of the NN designating specific frequency features is through sensors, such as accelerometers, to capture and collect vibration signals of a batch of healthy and abnormal indexing plates, convert the time-domain signals into frequency-domain signals, divide the frequency-domain signals into frequency bands as every 10Hz in the range of 1~1000Hz, obtain the energy peak value of each frequency band, 100 frequency bands' features are extracted, and these 100 frequency bands' features belong to the tilting axis and the rotating axis correspondingly. Next, use the Fisher criterion method to calculate the weight values of these 100 frequency bands' features. From these 100 weight values, the following three frequency bands' features can be summarized as key frequency bands' features of the tilting axis: 221Hz~230Hz, 431Hz~440Hz and 501Hz~510Hz, the following four frequency bands' features can be summarized as key frequencies bands' features of the rotating axis: 61Hz~70Hz, 291Hz~300Hz, 401Hz~410Hz and 431Hz~440Hz; next, normalizes the selected key frequency bands' features through the formula of data normalization as following:

$$X_{nom} = \frac{X - X_{min}}{X_{max} - X_{min}} \in [0,1]$$

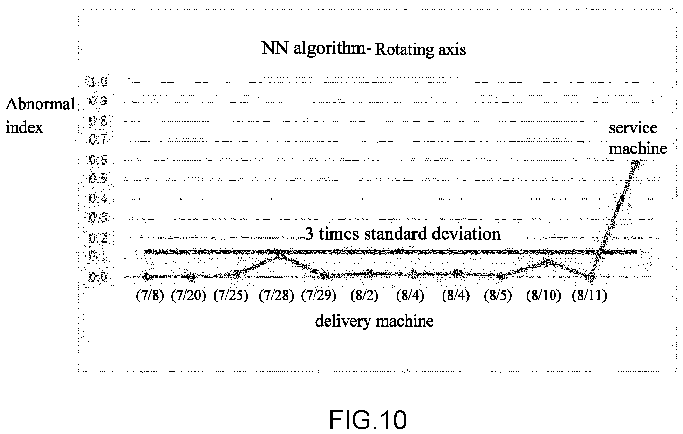

After normalizing all the data between 0 and 1, a training model is established for each tilting axis and rotating axis through the NN algorithm. Then obtaining working sate signals and corresponding key frequency feature of other batches of indexing plates, and substituting them into the training model for diagnosis, the results are shown as Figs. 9 and 10, and we can know that because the quality of the delivery machine is good and the accuracy meets the requirements, and through the identification of the NN algorithm the detecting values of the tilting axis and rotating axis of the delivery machine are below 3 times of standard deviation, and because the service machine has been used for many years, the detecting values of the service machine have big gaps with respect to that of the shipping machine.

Known from the above-mentioned experimental example, due to the diversity of the damage of the indexing plate, there are different presentations on the features of the time-domain and the frequency-domain, so we establish the above-mentioned three different diagnostic strategies to examine the problems of the indexing plate.

Through the description of the above specific implementation, the present invention can effectively integrate technologies such as real-time monitoring working status signals and artificial intelligence calculations to monitor the working status of the machine equipment and predictive diagnostic information such as fault types and decline degrees, and feedback the information to the user side for the user arranging the maintenance schedule, so as to achieve the goal of near zero downtime of machine.

While we have shown and described the embodiment in accordance with the present invention, it should be clear to those skilled in the art that further embodiments may be made without departing from the scope of the present invention.

## Claims

1. A system for intelligently monitoring machine equipment comprising a machine working status sensing module and an AI based machine diagnosis module;
**characterized in that**

the machine working status sensing module configured to respectively sense working status of a machine during an initial working period and subsequent working periods to produce initial and subsequent working status signals correspondingly; wherein the initial and subsequent working status signals are selected from a group consist of current signals, vibration signals and temperature signals of the machine;
the AI based machine diagnosis module comprising a machine-side preliminary data processing module and a remote advanced data processing module;
the machine-side preliminary data processing module including a feature calculation module; the feature calculation module configured to perform feature processing and mathematical calculations on the initial and subsequent working status signals to generate corresponding initial and subsequent feature information of the initial and subsequent working status signals;
the remote advanced data processing module configured to receiving the initial and subsequent feature information which transmitted from the machine-side preliminary data processing module through an information transmission module; the remote advanced data processing module comprising a big data analysis module and a fault prediction/health management module; the big data analysis module configured to perform artificial intelligence calculations on the initial feature information to establish AI fault type models and AI decline degree models; the AI fault type models and AI decline degree models being saved in a fault/decline case database; and the fault prediction/health management module continuously receiving and calculating the subsequent feature information which transmitted from the feature calculation module, and performing feature processing and mathematical calculations on the subsequent working status signals to generate corresponding subsequent feature information of the subsequent working status signals; and the fault prediction/health management module then using the subsequent feature information to perform artificial intelligence calculations and model comparisons with the AI fault type models and the AI decline degree models, so as to obtain corresponding prediction information of fault type and decline degree.

2. The system for intelligently monitoring machine equipment as claimed in claim 1, wherein algorithms of the big data analysis module and the fault prediction/health management module are respectively selected from a group consist of root mean square algorithm (RMS), Gaussian mixture model algorithm (GMM) and neural network algorithm (NN); the root mean square algorithm (RMS) calculates the time-domain signal features of the initial and subsequent working status signals; the Gaussian mixture model algorithm (GMM) calculates time-domain and frequency-domain signal features of the initial and subsequent working status signals; the neural network algorithm (NN) calculates frequency signal features of the initial and subsequent working status signals.

3. The system for intelligently monitoring machine equipment as claimed in claim 2, wherein the prediction information of fault type and decline degree is numerical information calculated by the root mean square algorithm (RMS), the Gaussian mixture model algorithm (GMM) and the neural network algorithm (NN).

4. The system for intelligently monitoring machine equipment as claimed in claim 3, wherein the fault prediction/health management module makes the numerical information into corresponding RMS, GMM and NN control charts, and the control charts includes numerical values and control lines; the feature calculation module connects to the fault prediction/health management module through the information transmission module to download and browse the control charts in real time; wherein 3 times standard deviation of the numerical values of time-domain features calculated by the RMS algorithm are used to construct an upper and a lower control lines; 3 times standard deviation of the numerical values of time-domain and frequency-domain features calculated by the GMM algorithm are used to construct a warning line.

5. The system for intelligently monitoring machine equipment as claimed in claim 1, wherein the big data analysis module includes a feature matrix/topology comparison model building module, and the feature matrix/topology comparison model building module is configured to classify the initial feature information to establish feature matrix/topology comparison models and store the feature matrix/topology comparison models in a feature matrix/topology comparison model database of the fault prediction/health management module; the fault prediction/health management module uses the feature matrix/topology comparison models to perform a feature matrix/topology hierarchical comparison on the initial feature information to obtain corresponding feature level orders, and then according to the feature level orders to re-extract the subsequent feature information during the subsequent working period to obtain exclusive level features of the subsequent feature information, and then sweep and compare the exclusive level features of the subsequent feature information with the AI fault type models and the AI decline degree models to obtain the corresponding prediction information of fault type and decline degree.

6. The system for intelligently monitoring machine equipment as claimed in claim 5, wherein algorithm of the feature matrix/topology comparison model building module is selected from a group consist of K-Nearest-Neighbor (KNN) and self-organizing feature maps (SOM).

7. The system for intelligently monitoring machine equipment as claimed in claim 1, wherein the fault prediction/health management module pass the prediction information of fault type and decline degree to the preliminary data processing module through the information transmission module; and the prediction information is displayed on a display screen of the machine-side preliminary data processing module.

8. A method for intelligently monitoring machine equipment, comprising steps of:

providing a machine working status sensing module and an AI based machine diagnosis module; the AI based machine diagnosis module comprising a machine-side preliminary data processing module and a remote advanced data processing module; the machine-side preliminary data processing module including a feature calculation module; the remote advanced data processing module including a big data analysis module and a fault prediction/health management module;
**characterized in that**
using the machine working status sensing module to respectively sense working status of a machine during an initial working period and subsequent working periods to produce initial and subsequent working status signals correspondingly;
wherein the initial and subsequent working status signals are selected from a group consist of current signals, vibration signals and temperature signals of the machine;
using the machine-side preliminary data processing module to capture the initial and subsequent working status signals, and using the feature calculation module to perform feature processing and mathematical calculations on the initial and subsequent working status signals to generate corresponding initial and subsequent feature information of the initial and subsequent working status signals; and using an information transmission module to transmit the initial and subsequent feature information from the machine-side preliminary data processing module to the remote advanced data processing module;

using the big data analysis module to perform artificial intelligence calculations on the initial feature information to establish AI fault type models and AI decline degree models and to save the AI fault type models and the AI decline degree models in a fault/decline case database;

using the fault prediction/health management module to continuously receive and calculate the subsequent feature information which transmitted from the feature calculation module, and to perform feature processing and mathematical calculations on the subsequent working status signals to generate corresponding subsequent feature information of the subsequent working status signals; and

using the fault prediction/health management module to apply the subsequent feature information to perform artificial intelligence calculations and model comparisons with the AI fault type models and the AI decline degree models, so as to obtain corresponding prediction information of fault type and decline degree.

9. The method as claimed in claim 8, wherein algorithms of the big data analysis module and the fault prediction/health management module are respectively selected from a group consist of root mean square algorithm (RMS), Gaussian mixture model algorithm (GMM) and neural network algorithm (NN); the root mean square algorithm (RMS) calculates the time-domain signal features of the initial and subsequent working status signals; the Gaussian mixture model algorithm (GMM) calculates time-domain and frequency-domain signal features of the initial and subsequent working status signals; the neural network algorithm (NN) calculates frequency signal features of the initial and subsequent working status signals.

10. The method as claimed in claim 9, wherein the prediction information of fault type and decline degree is numerical information calculated by the root mean square algorithm (RMS), the Gaussian mixture model algorithm (GMM) and the neural network algorithm (NN).

11. The method as claimed in claim 10, wherein the fault prediction/health management module makes the numerical information into corresponding RMS, GMM and NN control charts, and the control charts includes numerical values and control lines; the feature calculation module connects to the fault prediction/health management module through the information transmission module to download and browse the control charts in real time; wherein 3 times standard deviation of the numerical values of time-domain features calculated by the RMS algorithm are used to construct an upper and a lower control lines; 3 times standard deviation of the numerical values of time-domain and frequency-domain features calculated by the GMM algorithm are used to construct a warning line.

12. The method as claimed in claim 8, wherein the big data analysis module includes a feature matrix/topology comparison model building module; uses the feature matrix/topology comparison model building module to classify the initial feature information to establish a feature matrix/topology comparison model and store the feature matrix/topology comparison model in a feature matrix/topology comparison model database; uses the feature matrix/topology comparison model to perform a feature matrix/topology hierarchical comparison on the initial feature information to obtain corresponding feature level orders; according to the feature level orders re-extracts the subsequent feature information to obtain exclusive level features of the subsequent feature information, and then sweeps and compares the exclusive level features of the subsequent feature information with the AI fault type models and the AI equipment decline models to obtain the corresponding prediction information of fault type and decline degree.

13. The method as claimed in claim 12, wherein algorithm of the feature matrix/topology comparison model building module is selected from a group consist of K-Nearest-Neighbor (KNN) and self-organizing feature maps (SOM).

14. The method as claimed in claim 8, wherein uses the fault prediction/health management module to pass the prediction information of fault type and decline degree to the preliminary data processing module through the information transmission module; and uses a display screen of the machine-side preliminary data processing module to display the prediction information.

15. The method as claimed claim 8, wherein the step of performing feature processing and mathematical calculations on the initial and subsequent working status signals includes a feature extraction step, the feature extraction step is to convert the initial and subsequent working status signals into corresponding initial and subsequent feature information of time-domain, frequency-domain, envelope curve and power spectral density.

**1**

| 11<br>current sensor | 12<br>vibration sensor | 13<br>temperature sensor |
| --- | --- | --- |

10

22
signal acquisition
module

20
machine-side
preliminary data
processing module

210
visual monitoring chart

| 210a | 210b | 210c |
| --- | --- | --- |

30
remote advanced data
processing module

| 31<br>massive data<br>analysis module | 32<br>fault prediction/health<br>management module |
| --- | --- |

# FIG.1

FIG.2

FIG.3

FIG.4

FIG.5

**FIG.6**

**FIG.7**

GMM algorithm- Rotating axis        service machine

Gaussian distance value

3 times standard deviation

(7/8) (7/20) (7/25) (7/28) (7/29) (8/2) (8/4) (8/4) (8/5) (8/10) (8/11)

delivery machine

FIG.8

NN algorithm- Tilting axis

Abnormal index

service machine

3 times standard deviation

(7/8) (7/20) (7/25) (7/28) (7/29) (8/2) (8/4) (8/4) (8/5) (8/10) (8/11)

delivery machine

FIG.9

NN algorithm- Rotating axis

Abnormal index

1.0
0.9
0.8
0.7
0.6
0.5
0.4
0.3
0.2
0.1
0.0

service machine

3 times standard deviation

(7/8) (7/20) (7/25) (7/28) (7/29) (8/2) (8/4) (8/4) (8/5) (8/10) (8/11)

delivery machine

FIG.10

Europäisches
Patentamt

European
Patent Office

Office européen
des brevets

**EUROPEAN SEARCH REPORT**

Application Number

EP 23 19 0763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHREYAS GAWDE ET AL: "Multi-Fault Diagnosis Of Industrial Rotating Machines Using Data-Driven Approach: A Review Of Two Decades Of Research", ARXIV.ORG, CORNELL UNIVERSITY LIBRARY, 201 OLIN LIBRARY CORNELL UNIVERSITY ITHACA, NY 14853, 30 May 2022 (2022-05-30), XP091251267, | 1-15 | INV. G05B23/02 |
| Y | * abstract * * page 1 - page 8 * * page 15 - page 50 * ----- | 1-15 | |
| Y | Li Fuxing ET AL: "Research on Digital Twin and Collaborative Cloud and Edge Computing Applied in Operations and Maintenance in Wind Turbines of Wind Power Farm" In: "Proceedings of the 2nd International Conference on Green Energy, Environment and Sustainable Development (GEESD2021)", 3 December 2021 (2021-12-03), IOS Press, XP093042624, ISSN: 2352-751X ISBN: 978-1-64368-223-5 DOI: 10.3233/ATDE210263, Retrieved from the Internet: URL:http://dx.doi.org/10.3233/ATDE210263> * the whole document * ----- | 1-15 | |
| A | US 2020/385141 A1 (BERESON ANDREW LOUIS [US] ET AL) 10 December 2020 (2020-12-10) * paragraphs [0001], [0005], [0009] - [0011], [0019] - [0046]; figures 1-3 * ----- | 1-15 | TECHNICAL FIELDS SEARCHED (IPC) G05B |

The present search report has been drawn up for all claims

| Place of search | Date of completion of the search | Examiner |
|---|---|---|
| Munich | 23 January 2024 | Postemer, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 336 295 A1

## ANNEX TO THE EUROPEAN SEARCH REPORT
## ON EUROPEAN PATENT APPLICATION NO.

EP 23 19 0763

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | | Publication date | Patent family member(s) | | Publication date |
|---|---|---|---|---|---|
| US 2020385141 | A1 | 10-12-2020 | AU 2020202134 | A1 | 24-12-2020 |
| | | | BR 102020007655 | A2 | 08-12-2020 |
| | | | CN 112052714 | A | 08-12-2020 |
| | | | EP 3748450 | A1 | 09-12-2020 |
| | | | JP 2021005370 | A | 14-01-2021 |
| | | | KR 20200140999 | A | 17-12-2020 |
| | | | US 2020385141 | A1 | 10-12-2020 |

EPO FORM P0459

For more details about this annex : see Official Journal of the European Patent Office, No. 12/82